# FASCICULE DE BREVET EUROPEEN

(11) **EP 4 343 089 B1**
(45) Date de publication et mention de la délivrance du brevet: **27.05.2026**
(21) Numéro de dépôt: 23197939.4
(22) Date de dépôt: 18.09.2023
(51) Int. Cl.: E05B 47/02, E05B 17/22, E05C 9/00, H04N 7/18

(54) **SYSTÈME D'AIDE AU MAINTIEN À DOMICILE**
HEIM-UNTERSTÜTZUNGSSYSTEM
HOME MAINTENANCE ASSISTANCE SYSTEM

(30) Priorité: 21.09.2022 FR 2209534
(43) Date de publication de la demande: 27.03.2024
(73) Titulaire: Cogelec, 85290 Mortagne-sur-Sèvre (FR)
(72) Inventeur: LECLERC, Roger, 85130 LES LANDES GENUSSON (FR)
(74) Mandataire: INNOV-GROUP

(56) Documents cités:
- CN-U- 212 809 314
- FR-A1- 2 707 324
- FR-A1- 3 006 486
- US-A1- 2010 123 323

## Description

L'invention concerne un système d'aide au maintien à domicile ainsi qu'un bandeau de porte pour la réalisation de ce système d'aide au maintien à domicile.

Les systèmes d'aide au maintien à domicile vise notamment à maintenir chez eux, aussi longtemps que possible, les personnes atteintes d'une maladie. Cela évite de les placer prématurément dans des centres d'accueil.

De nombreux systèmes d'aide au maintien à domicile ont été développés. Ils permettent notamment un contrôle à distance de différents paramètres physiologiques ou psychologiques. Toutefois, ces systèmes ne sont pas adaptés au maintien à domicile de personnes atteintes de maladies neurodégénératives comme la maladie d'Alzheimer. En particulier, dans le cas des personnes atteintes de maladies neurodégénératives, il faut que le système soit utilisable sans que cela nécessite un quelconque apprentissage de la part de la personne aidée. De plus, dans le cas des personnes atteintes de maladies neurodégénératives, il faut souvent s'assurer que ces personnes ne quittent pas seules leurs domiciles car elles risquent de se perdre.

De l'état de la technique est connu de US2010/123323A1, FR2707324A1, FR3006486A1 et CN212809314U.

L'invention vise à proposer un système simple à installer et qui permettent d'aider au maintien à domicile d'une personne atteinte d'une maladie neurodégénérative comme la maladie d'Alzheimer.

Elle a donc pour objet un système d'aide au maintien à domicile conforme à la revendication 1, ce système comprenant un bandeau de porte selon la revendication 2, en tant que tel, pour ce système.

Elle a également pour objet le bandeau de porte selon la revendication 2, pour la réalisation de ce système d'aide au maintien à domicile.

L'invention sera mieux comprise à la lecture de la description qui va suivre, donnée uniquement à titre d'exemple non limitatif et faite en se référant aux dessins sur lesquels :
- la figure 1 est une illustration schématique d'un système d'aide au maintien à domicile,
- la figure 2 est une illustration schématique des différents composants d'un bandeau de porte utilisé dans le système de la figure 1,
- la figure 3 est un organigramme d'un procédé de fonctionnement du système de la figure 1.

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description un exemple détaillé de mode de réalisation est d'abord décrit dans un chapitre I en référence aux figures. Ensuite, dans un chapitre II, des variantes de ce mode de réalisation sont introduits. Enfin, les avantages des différents modes de réalisation sont précisés dans un chapitre III.

### Chapitre I : Exemple de mode de réalisation

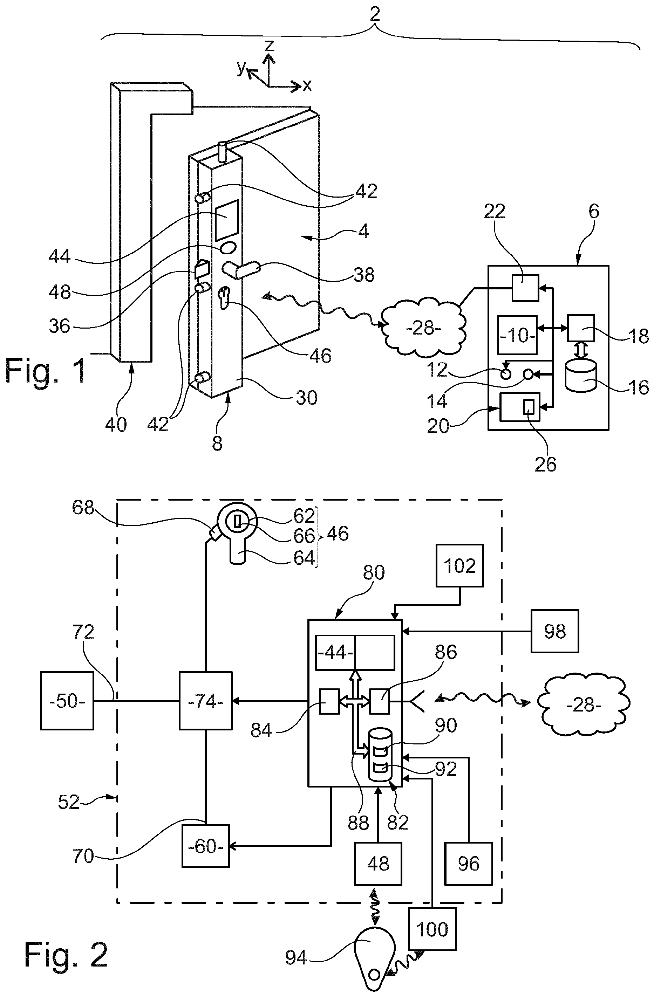

La figure 1 représente un système 2 d'aide au maintien à domicile. Dans cet exemple particulier de réalisation, le système est conçu pour aider au maintien à domicile des personnes atteintes de maladies neurodégénératives telles que la maladie d'Alzheimer. Les personnes atteintes de telles maladies sont susceptibles de se perdre lorsqu'elle sorte seule de leur domicile. A l'extérieur de leur domicile, il est donc nécessaire qu'elles soient accompagnées d'une personne qui les aide, si nécessaire, à retrouver le chemin qui les ramène à leur domicile. Par la suite, la personne à aider est appelée « personne aidée », la personne qui l'aide est appelée « aidant » et la personne qui l'accompagne à l'extérieur de son domicile est appelé « accompagnant ».

Le système 2 permet de s'assurer que, si nécessaire, la personne aidée ne peut pas sortir de son domicile en absence de l'accompagnant. A cet effet le système 2 comporte :
- une porte 4 d'entrée,
- un terminal distant 6 destiné à être utilisé par l'aidant, et
- un bandeau électronique 8 de porte.

La porte 4 est située à l'entrée du domicile de la personne aidée. Cette porte 4 délimite l'intérieur du domicile de l'extérieur du domicile. Par exemple, la porte 4 est une porte pallière d'un appartement ou d'une maison ou de tout autre logement. La porte 4 comporte une face intérieure tournée vers l'intérieur du domicile et, du côté opposée, une face extérieure. Les faces intérieure et extérieure s'étendent principalement dans des plans verticaux parallèles. La porte 4 est déplaçable entre une position ouverte, représentée sur la figure 1, et une position fermée. Dans la position ouverte, la personne aidée peut sortir de son domicile et donc se déplacer depuis l'intérieur du domicile vers l'extérieur. A l'inverse, dans la position fermée, la personne aidée ne peut pas sortir de son domicile.

Le terminal 6 est normalement situé à l'extérieur du domicile et peut être éloigné de plusieurs kilomètres du domicile de la personne aidée. Par exemple, ici, le terminal 6 est situé dans un centre d'assistance spécialisé dans l'aide aux personnes souffrant d'une maladie neurodégénérative. Ce centre regroupe typiquement plusieurs aidants et plusieurs exemplaires du terminal 6 de manière à être capable de porter assistance simultanément à une multitude de personnes aidées. Pour simplifier la figure 1, un seul terminal 6 est représenté. Par exemple, tous les exemplaires du terminal 6 sont identiques de sorte que seul le terminal 6 est décrit plus en détail par la suite.

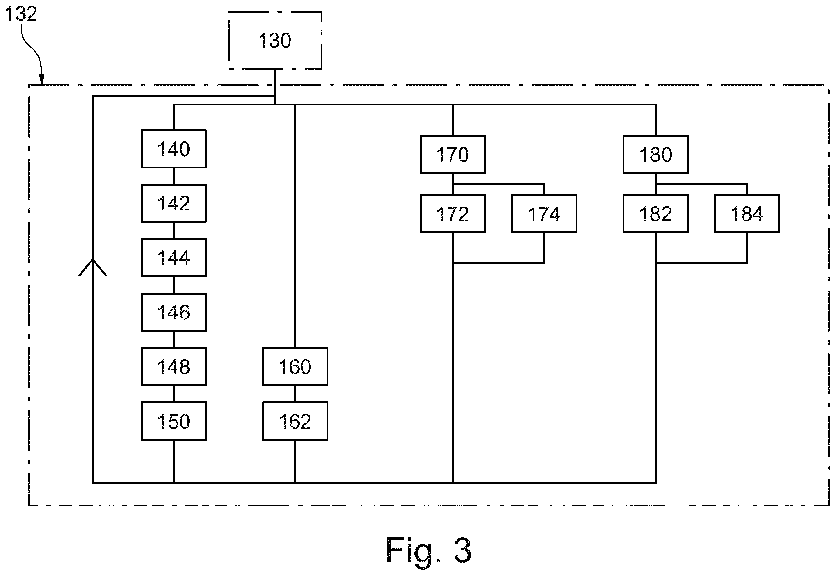

Le terminal 6 est capable d'établir une communication visiophonique. A cet effet, il comporte un écran 10, une caméra 12 et un microphone et un haut parleur 14. Il est également capable de mettre en œuvre le procédé de la figure 3 pour aider au maintien à domicile. En particulier, il est capable d'envoyer une commande de déverrouillage au bandeau 8. Pour cela, il comporte en plus :
- une mémoire 16 comportant les données et les instructions nécessaires pour exécuter le procédé de la figure 3,
- un microprocesseur 18 apte à exécuter les instructions enregistrées dans la mémoire 16,
- une interface homme-machine 20, et
- un émetteur-récepteur 22.

L'interface 20 comporte, par exemple, une ou plusieurs boutons actionnables par l'aidant. Ici, elle comporte un bouton 26.

L'émetteur-récepteur 22 permet de raccorder le terminal 6 au bandeau 8 par l'intermédiaire d'un réseau 28 de télécommunication grande distance tel qu'un réseau de téléphonie sans-fil ou le réseau Internet.

Le terminal 6 est par exemple un ordinateur fixe ou portable.

Ici, le bandeau 8 est un bandeau de porte multipoints. Le bandeau 8 est monté, sans aucun degré de liberté, sur la face intérieure de la porte 4.

Le bandeau 8 se présente sous la forme d'une seule pièce à l'intérieure de laquelle sont logés les différents composants décrits en référence à la figure 2. A cet effet, le bandeau 8 se présente sous la forme d'un boîtier rigide 30 à l'intérieur duquel sont fixés ses différents composants. Le boîtier 30 est ici fixé le long de la tranche verticale de la porte 4 située du côté opposé aux gonds. Le boîtier 30 est fixé sur la face intérieure de la porte 4, par exemple, à l'aide de vis. Ainsi, avantageusement, le bandeau 8 peut être installé sur la face intérieure d'une porte préexistante.

Sur la figure 1, seules sont visibles les composants du bandeau 8 qui dépassent du boîtier 30 ou traverse ce boîtier 30. Ainsi, seuls les composants suivants du bandeau 8 sont visibles sur la figure 1 :
- un pêne 36 demi-tour,
- une poignée 38,
- des pênes dormants 42,
- un écran tactile 44,
- un cylindre 46 de serrure,et
- une tête 48 de lecture de badges.

Le pêne 36 est déplaçable par la poignée 38 depuis une position sortie (représentée sur la figure 1) jusqu'à une position rentrée. Dans la position sortie, le pêne 36 est reçu dans une cavité correspondante aménagée dans un un châssis 40 fixé sans aucun degré de liberté sur le dormant de la porte 4. Ainsi, dans la position sortie, le pêne 36 maintient la porte 4 dans sa position fermée. Dans sa position rentrée, le pêne 36 est rétracté à l'intérieur du boîtier 30 et situé en dehors de la cavité aménagée dans le châssis 40. Ainsi, lorsque le pêne 36 est dans sa position rentrée, la porte 4 peut être déplacée de sa position fermée vers sa position ouverte si celle-ci a, au préalable, été déverrouillée. Le pêne 36 est repoussé, en permanence, vers sa position sortie par un ressort de rappel. L'extrémité distale du pêne 36 est biseauté de sorte que lorsque la porte 4 est claquée de sa position ouverte vers sa position fermée, par coopération de forme entre l'extrémité biseautée et le châssis 40, le pêne 36 s'enfonce à l'intérieur du boîtier 30 à l'encontre de la force du ressort de rappel afin de permettre à la porte 4 d'atteindre sa position fermée. Une fois la position fermée atteinte, le ressort de rappel ramène automatiquement le pêne 36 dans sa position sortie ce qui bloque la porte 4 dans sa position fermée.

La poignée 38 est déplaçable à la main, par une personne située à l'intérieur du domicile, depuis une position de repos (représentée sur la figure 1) jusqu'à une position enfoncée. Pour cela, ici, la poignée 38 tourne autour d'un axe horizontal solidaire du boîtier 30. Typiquement, la poignée 38 est fixée à l'extrémité d'une tige qui se prolonge à l'intérieur du boîtier 30 pour entraîner le pêne 36 de sa position sortie vers sa position rentrée lorsque la poignée 38 est tournée de sa position de repos vers sa position enfoncée.

Chacun des pênes dormants 42 est déplaçable entre une position sortie et une position rentrée. Dans la position sortie, chaque pêne 42 est reçu dans une cavité correspondante aménagée dans le châssis 40 pour verrouiller la porte 4 dans sa position fermée. Dans sa position rentrée, chaque pêne 42 est rétracté à l'intérieur du boîtier 30 et situé en dehors de la cavité aménagée dans le châssis 40. Ainsi, lorsque tous les pênes 42 sont dans leur position rentrée, la porte 4 est déverrouillée et peut librement être déplacée de sa position fermée vers sa position ouverte après avoir enfoncé la poignée 38.

Sur la figure 1, quatre pênes dormants 42 sont représentés dans leur position sortie pour les rendre plus visibles même si la porte 4 est dans sa position ouverte. Par exemple, chaque pêne 42 est un barreau cylindrique déplaçable en translation entre ses positions sortie et rentrée. Contrairement au pêne 36, les extrémités distales des pênes 42 ne sont pas biseautées.

L'écran tactile 44, le cylindre 46 de serrure et la tête 48 de lecture sont accessibles par une personne située à l'intérieur du domicile.

La figure 1 représente également un repère orthogonal XYZ. La direction Z de ce repère correspond à la verticale. Les directions X et Y sont horizontales. La direction X est parallèle au plan vertical dans lequel s'étend principalement la porte 4 lorsqu'elle est dans sa position fermée. La direction X est dirigée de la tranche de la porte le long de laquelle est fixé le bandeau 8, vers les gonds de cette porte. La direction Y est dirigée de l'intérieur du domicile vers l'extérieur du domicile.

La figure 2 représente schématiquement l'architecture intérieur du bandeau 8.

Le bandeau 8 comporte un mécanisme 50 à pêne et un système 52 d'actionnement du mécanisme 50.

Le mécanisme 50 comprend les pênes 42 ainsi que la tringlerie nécessaire pour les déplacer entre leurs positions sortie et rentrée. Par contre, dans ce mode de réalisation, le mécanisme 50 ne comporte pas le pêne 36.

Le système 52 d'actionnement déplace le mécanisme 50 depuis un état saillant vers un état escamoté et vice versa. Dans l'état saillant, au moins un pêne 42 est dans sa position sortie. Ici, dans l'état saillant, tous les pênes 42 sont dans leur position sortie. Dans l'état escamoté, tous les pênes 42 sont dans leur position rentrée. A cet effet, par exemple, le système 52 comporte une roue dentée engrenée avec une crémaillère du mécanisme 50 à pêne. Lorsque cette roue dentée tourne, dans un premier sens, cela déplace le mécanisme 50 de son état saillant vers son état escamoté. Lorsque cette même roue dentée tourne en sens inverse, cela déplace le mécanisme 50 de l'état escamoté vers son état saillant. Dans ce mode de réalisation, le système 52 ne permet pas de déplacer le pêne 36. Le pêne 36 est seulement déplaçable à l'aide de la poignée 38.

Pour déplacer le mécanisme 50 entre ses états saillant et escamoté, le système 52 comporte un moteur électrique 60 et le cylindre 46.

Le cylindre 46 est notamment apte à déplacer le mécanisme 50 de son état saillant vers son état escamoté même en cas d'indisponibilité du moteur électrique 60. Le moteur 60 est dit "indisponible" lorsqu'il ne peut pas être utilisé pour déplacer le mécanisme 50 de son état saillant vers son état escamoté. Une telle indisponibilité peut résulter d'une panne du moteur 60 ou d'un autre élément du système 52 d'actionnement. Cette indisponibilité peut aussi résulter, par exemple, d'une coupure de l'alimentation électrique du moteur 60.

Dans ce mode de réalisation, le cylindre 46 est un cylindre mécanique dépourvu de tout composant électronique qui nécessite d'être alimenté pour fonctionner. Ici, le cylindre 46 est un cylindre mécanique au format européen. Dans ce mode de réalisation, il comporte deux demi-cylindres accessibles, respectivement, depuis les côtés intérieur et extérieur de la porte 4. Ainsi, le cylindre 46 peut être utilisé aussi bien à partir du côté extérieur de la porte 4 qu'à partir de son côté intérieur. Pour cela, le bandeau 8 comporte un logement traversant de part en part le boîtier 30 dans la direction Y et dans lequel une première portion du cylindre 46 peut être insérée. Ce logement est situé en vis-à-vis d'un trou traversant la porte 4 dans la direction Y et dans lequel une seconde portion du cylindre 46 est insérée. Ici, la section verticale du logement et du trou sont identiques est apte chacune à permettre l'insertion du cylindre 46. Ainsi, lorsque le cylindre 46 est reçu dans ce logement et ce trou, le cylindre 46 est accessible aussi bien du côté extérieur que du côté intérieur. Classiquement, le cylindre 46 est uniquement fixé, sans aucun degré de liberté, à la porte 4 à l'aide d'une vis dont la tête de vis est seulement accessible à partir de la tranche verticale de la porte 4 ou à partir d'une face verticale du boîtier 30 parallèle à cette tranche verticale de la porte 4.

Le cylindre 46 comporte un rotor 62 monté à rotation à l'intérieur d'un stator fixe 64. Le stator 64 est fixé, sans aucun degré de liberté, sur la porte 4. Le rotor 62 comporte un canal 66 de clé qui débouche du côté intérieur et du côté extérieur. Ce canal 66 est destiné à recevoir une clé. Le rotor 62 peut être entraîné en rotation autour de son axe de rotation uniquement lorsqu'une clé autorisée est introduite à l'intérieur du canal 66 puis tournée. Une clé autorisée est une clé autorisée à déplacer le mécanisme 50 vers son état escamoté. A l'inverse, en l'absence de clé à l'intérieur du canal 66 ou en présence d'une clé non autorisée à l'intérieur du canal 66, le rotor 62 est bloqué en rotation et ne peut pas tourner autour de son axe de rotation.

Typiquement, à cet effet, le cylindre 46 comporte un premier jeu de goupilles déplaçables en translation à l'intérieur du stator 64 et, en vis-à-vis, un second jeu de goupilles déplaçables en translation à l'intérieur du rotor 62 par la clé introduite dans le canal 66. Les goupilles du premier jeu sont également connues sous le terme de "contre-goupilles". Lorsqu'une clé autorisée est introduite à l'intérieur du canal 66, les interfaces entre les goupilles du premier et du second jeux de goupilles sont toutes situées au niveau de l'interface entre le rotor 62 et le stator 64, ce qui libère la rotation du rotor 62. L'interface entre le rotor 62 et le stator 64 est également connue sous le terme de "ligne de césure". A l'inverse, en l'absence de clé dans le canal 66 ou en présence d'une clé non autorisée, les interfaces entre les goupilles du premier et du second jeux de goupilles ne sont pas toutes situées au niveau de l'interface entre le rotor 62 et le stator 64, ce qui interdit la rotation du rotor 62.

Le cylindre 46 comporte également un panneton 68. Le panneton 68 est entraîné en rotation par le rotor 62 lorsque ce rotor est tourné. C'est la rotation de ce panneton 68 qui actionne le déplacement du mécanisme 50 vers son état escamoté.

Le moteur 60 comporte un arbre 70 d'entraînement. Lorsque le moteur 60 est commandé pour déplacer le mécanisme 50 vers son état escamoté, c'est la rotation de l'arbre 70 qui actionne le déplacement du mécanisme 50.

Le système 52 comporte un arbre 72 de sortie et un mécanisme 74 de couplage mécanique du panneton 68 et de l'arbre 70 à cet arbre 72 pour l'entraîner en rotation. L'arbre 72 déplace le mécanisme 50 de son état saillant vers son état escamoté lorsqu'il est tourné dans un sens et de son état escamoté vers son état saillant lorsqu'il est tourné en sens inverse.

Le mécanisme 74 de couplage transmet le mouvement de rotation du panneton 68 à l'arbre 72 lorsque le rotor 62 est entraîné en rotation par la clé autorisée. En alternance, il transmet le mouvement de rotation de l'arbre 70 à l'arbre 72 lorsque le moteur 60 entraîne cet arbre 70 en rotation. Pour cela, par exemple, le mécanisme 74 de couplage comporte :
- un différentiel comportant un premier et un second arbres d'entrée et l'arbre 72 de sortie,
- une liaison mécanique qui raccorde mécaniquement en permanence l'arbre 70 au premier arbre d'entrée, et
- une liaison mécanique qui raccorde mécaniquement le panneton 68 au second arbre d'entrée.

Par exemple, ici, le mécanisme 74 de couplage est identique à l'un de ceux décrits dans la demande de brevet français déposée sous le numéro FR2203726 le 21/04/2022 par la société COGELEC.

Pour commander le moteur 60, le système 52 comporte une unité 80 de commande. Cette unité 80 est configurée pour mettre en œuvre le procédé de la figure 3. A cet effet, l'unité 80 comporte :
- un mémoire 82,
- un microprocesseur 84 programmable,
- un émetteur/récepteur 86,
- l'écran tactile 44, et
- un bus 88 de transmission d'informations qui raccorde entre eux les différents composants de l'unité 80.

La mémoire 82 est une mémoire non volatile comportant les instructions à exécuter par le microprocesseur 84. La mémoire 82 comporte l'ensemble des instructions et des données nécessaires pour exécuter les différentes fonctions décrites dans ce texte. En particulier, ici, elle comporte :
- les instructions d'un module logiciel 90 d'aide au maintien à domicile, et
- les instructions d'un module logiciel 92 de contrôle d'accès.

L'émetteur/récepteur 86 est apte à établir une liaison sans fil de communication avec le terminal 6 par l'intermédiaire du réseau 28.

La tête 48 de lecture de badges est raccordée à l'unité 80 pour transmettre au module 92 de l'unité 80 les droits d'accès lus dans la mémoire d'un badge 94. Le badge 94 est un badge transportable, à la main, par un être humain. Par exemple, le badge 94 est un badge à transpondeur qui transmet les droits d'accès contenus dans sa mémoire uniquement lorsqu'il est présenté à proximité de la tête 48. Typiquement, la tête 48 permet uniquement de lire les droits d'accès enregistrés dans un badge situé à moins de 1 m ou à moins de 30 cm de la tête 48. De préférence, le badge 94 est un badge qui ne dispose pas de sa propre source d'alimentation. Le badge 94 est uniquement alimenté par la tête 48 lorsqu'il est à proximité de cette tête 48. La combinaison de la tête 48 de lecture avec le module 92 de l'unité 80 forme un premier dispositif intérieur de contrôle de droits d'accès. Dans ce texte, un dispositif « intérieur » de contrôle d'accès est un dispositif de contrôle d'accès accessible uniquement depuis l'intérieur du domicile et qui permet de déverrouiller la porte 4 si les droits d'accès acquis l'autorise.

Ici, le système 52 comporte un appareil visiophonique 96 pour établir une communication visiophonique. Cet appareil 96 comporte un caméra, un haut-parleur et un microphone. Cet appareil 96 est raccordé à l'unité 80.

Le bandeau 8 comporte aussi, raccordés à l'unité 80 de commande :
- un capteur 98 de prise en main de la poignée 38, et
- une tête 100 de lecture de badges.

Le capteur 98 mesure une grandeur physique qui permet de déterminer si la personne aidée a saisi la poignée 38 pour sortir. Pour cela, ici, le capteur 98 est logé dans la poignée 38 est détecte le contact entre la main de la personne aidée et la surface de la poignée 38. Par exemple, le capteur 98 est un capteur tactile tel qu'un capteur capacitif ou piézoélectrique.

La tête 100 est utilisée pour acquérir les droits d'accès d'une personne située du côté extérieur de la porte 4 et, en réponse, déverrouiller la porte 4 si les droits d'accès acquis autorisent ce déverrouillage. Ici, la tête 100 est capable de lire les droits d'accès enregistrés dans les mêmes badges que ceux utilisés avec la tête 48. Ainsi, le même badge 94 peut être utilisé aussi bien avec la tête 48 qu'avec la tête 100. Pour cela, dans ce mode de réalisation, la tête 100 est structurellement identique à la tête 48 sauf qu'elle est apte à lire des badges présentés du côté extérieur de la porte 4. Par exemple, à cet effet, la tête 100 est montée sur la face extérieure de la porte 4. La tête 100 est aussi raccordée au module 92 de contrôle d'accès. La combinaison de la tête 100 et du module 92 de contrôle d'accès forme un dispositif extérieur de contrôle de droit d'accès. Dans ce texte, un dispositif « extérieur » de contrôle d'accès est un dispositif de contrôle d'accès accessible uniquement depuis l'extérieur du domicile et qui permet de déverrouiller la porte 4 si les droits d'accès acquis l'autorise.

Ici, l'unité 80 est aussi capable de commander le moteur 60 pour faire tourner l'arbre 70 en sens inverse et ainsi ramener le mécanisme 50 dans son état saillant. Par exemple, après une durée prédéterminée écoulée après que la porte 4 est dans sa position fermée, l'unité 80 commande automatiquement le moteur 60 pour ramener le mécanisme 50 dans son état saillant. Pour savoir si la porte 4 est dans sa position fermée, le bandeau 8 comporte un capteur 102 d'ouverture/fermeture de la porte 4 raccordé à l'unité 80 de commande.

D'autres fonctionnalités de l'unité 80 sont décrites plus loin.

Le fonctionnement du système 2 va maintenant être décrit en se référant à la figure 3.

Lors d'une phase 130 de configuration, les différents droits d'accès qui autorisent le déverrouillage de la porte 4 sont pré-enregistrés dans la mémoire 82. Par exemple, lors de cette phase 130, des droits d'accès autorisant le badge 94 à déverrouiller la porte 4 sont enregistrés dans la mémoire 82. Typiquement, ces droits d'accès comportent un identifiant unique du badge 94. Lors de cette phase 130, un code d'ouverture est également enregistré dans la mémoire 82. Les informations nécessaires à l'établissement d'une liaison avec le terminal 6 à travers le réseau 28 sont également enregistrées dans la mémoire 82.

Une fois la phase 130 de configuration terminée, une phase 132 d'utilisation du système 2 est exécutée.

Dans le cas où la personne aidée souhaite sortir, elle prend en main la poignée 38 afin de la déplacer vers sa position enfoncée.

Lors d'une étape 140, le capteur 98 transmet ses mesures au module 90 de l'unité 80.

Lors d'une étape 142, à partir des mesures transmises par le capteur 98, le module 90 détecte automatiquement que la personne aidée a l'intention de sortir.

En réponse, lors d'une étape 144, le module 90 déclenche automatiquement l'établissement d'une communication visiophonique avec le terminal 6 par l'intermédiaire du réseau 28.

Lors d'une étape 146, une fois la communication visiophonique établie, l'unité 80 acquière le son et l'image acquis, respectivement, par le microphone et la caméra de l'appareil 96 et les transmet au terminal 6 qui les restitue à l'aidant par l'intermédiaire, respectivement, du haut parleur 14 et de l'écran 10. En sens inverse, l'unité 80 affiche sur l'écran 44 les images filmées par la caméra 12 et restitue les sons acquis par le microphone du terminal 6 par l'intermédiaire du haut-parleur de l'appareil 96.

L'aidant peut alors discuter avec la personne aidée et lui demander de patienter le temps qu'un accompagnant vienne le chercher.

Une fois que l'accompagnant est présent devant la porte 4 à l'extérieur du domicile, l'aidant appui sur le bouton 26 du terminal 6. En réponse, lors d'une étape 148, le terminal 6 transmet, par l'intermédiaire du réseau 28, une commande de déverrouillage au module 90 de maintien à domicile.

Lors d'une étape 150, lorsque le module 90 reçoit la commande de déverrouillage, il commande le moteur 60 qui déplace le mécanisme 50 à pêne depuis sa position saillante vers sa position escamotée.

La personne aidée peut alors sortir et rejoindre l'accompagnant qui l'attend.

Tant qu'aucune commande de déverrouillage n'est reçue par le module 90, le mécanisme 50 reste dans son état saillant pour empêcher la personne aidée de sortir seule.

Alternativement, l'accompagnant peut être équipé d'un badge autorisé tel que le badge 94. Dans ce cas, une fois présent devant la porte 4, il présente son badge 94 devant la tête 100 de lecture.

En réponse, lors d'une étape 160, la tête 100 lit les droits d'accès enregistrés dans le badge 94 et les transmet au module 92 de contrôle d'accès. Le module 92 compare les droits d'accès reçus aux droits d'accès pré-enregistrés lors de la phase 130.

Si ces droits d'accès reçus et pré-enregistrés correspondent, lors d'une étape 162, le module 92 commande le moteur 60 qui déplace alors le mécanisme 50 à pêne depuis son état saillant vers son état escamoté. L'accompagnant peut alors ouvrir la porte 4 et aller chercher la personne aidée pour qu'elle sorte avec elle. Selon cette alternative, il n'est pas nécessaire que l'aidant envoie une commande de déverrouillage à l'unité 80 de commande. Par contre, cela suppose d'équiper chaque accompagnant d'un badge qui l'autorise à déverrouiller la porte 4.

Il est fréquent que la personne aidée habite avec une personne qui peut librement sortir comme, par exemple, son conjoint. Dans ce cas, avantageusement, le conjoint est équipé d'un badge qui l'autorise à déverrouiller la porte 4. Par la suite, les explications sont données dans le cas particulier d'un conjoint équipé du badge 94. Toutefois, ce qui est décrit dans ce cas particulier, s'applique à toute personne équipée d'un badge autorisé et située à l'intérieur du logement.

Lorsque le conjoint souhaite sortir, il présente son badge 94 devant la tête 48 de lecture. En réponse, lors d'une étape 170, la tête 48 lit les droits d'accès enregistrés dans le badge 94 et les transmet au module 92 de contrôle d'accès. Le module 92 compare les droits d'accès reçus aux droits d'accès pré-enregistrés lors de la phase 130.

Si ces droits d'accès reçus et pré-enregistrés correspondent, lors d'une étape 172, le module 92 commande le moteur 60 qui déplace alors le mécanisme 50 à pêne depuis son état saillant vers son état escamoté.

En parallèle, lors d'une étape 174, le module 92 inhibe l'établissement de la communication visiophonique avec le terminal 6 pendant une durée prédéterminée. Par exemple, pour cela, le module 92 inhibe l'exécution du module 90 de maintien à domicile. La durée prédéterminée est choisie assez longue pour :
- que le mécanisme 50 soit déplacé de son état saillant vers son état escamoté, puis
- que la poignée 38 soit déplacée par le conjoint de sa position de repos jusqu'à sa position enfoncée afin de déplacer le pêne 38 dans sa position rentrée, puis
- que la porte 4 puisse être ouverte puis refermée derrière le conjoint.
Pour cela, par exemple, la durée prédéterminée est choisie supérieure à 10 s ou 30 s. La durée prédéterminée est aussi choisie assez courte pour ré-activer le module 90 dès que possible après la sortie du conjoint. Par exemple, la durée prédéterminée est aussi choisie inférieure à 5 min ou 1 min. Par exemple, ici, la durée prédéterminée est de 1 min.

Ainsi, dans ce cas, lorsque le conjoint enfonce la poignée 38, cela ne déclenche pas l'établissement automatique de la liaison visiophonique. Le conjoint peut donc librement sortir sans avoir à faire intervenir l'aidant. De plus, en utilisant le même badge 94, le conjoint peut librement rentrer dans son domicile. L'entrée du conjoint dans son domicile se déroule comme décrit dans le cas des étapes 160 et 162.

Alternativement, lorsque le conjoint souhaite sortir, il tape un code secret d'ouverture sur un clavier affiché sur l'écran 44.

En réponse, lors d'une étape 180, le module 92 de contrôle d'accès acquière le code secret tapé et le compare au code d'ouverture pré-enregistré lors de la phase 130.

Si le code d'accès acquis correspond au code d'ouverture pré-enregistré, lors d'une étape 182, le module 92 commande le moteur 60 qui déplace alors le mécanisme 50 à pêne depuis son état saillant vers son état escamoté.

En parallèle, lors d'une étape 184, le module 92 inhibe l'établissement de la communication visiophonique avec le terminal 6 pendant une durée prédéterminée. Cette étape 184 est, par exemple, identique à l'étape 174.

Dans ce cas, une personne située à l'intérieur du domicile peut sortir de ce domicile sans assistance de l'aidant et sans être équipée d'un badge. La combinaison du clavier affiché sur l'écran 44 et du module 92 de contrôle d'accès forme un second dispositif intérieur de contrôle d'accès.

### Chapitre II :Variantes :

### Variantes du bandeau de porte :

De nombreux autres modes de réalisation du capteur 98 sont possibles. Par exemple, le capteur 98 est remplacé par un capteur de mouvement, tel qu'un accéléromètre ou un gyromètre, qui détecte un déplacement de la poignée de sa position de repos vers sa position enfoncée. Le capteur 98 peut aussi être remplacé par un détecteur infrarouge qui détecte la présence de la main sur la poignée. Le capteur de prise en main peut aussi être incorporé à l'intérieur du boîtier 30 du bandeau de porte. Par exemple, dans ce dernier cas, le capteur mesure une rotation de la tige carré qui relie la poignée 38 au boîtier 30.

En variante le pêne demi-tour 36 est intégré dans la porte et non pas dans le bandeau de porte. Dans ce cas, le bandeau de porte est fixé sur la face intérieure de la porte 4 de manière à ce que la tige carrée de la poignée 38 le traverse de part en part le boîtier 30 avant de déboucher dans la porte 4 pour s'engrener avec le pêne demi-tour 36.

En variante, la poignée 38 ne déplace pas le pêne demi-tour. Par exemple, elle est uniquement utilisée pour détecter une intention de sortir. Dans ce cas, le pêne demi-tour 36 est omis ou déplacer de sa position saillante vers sa position rentrée par le moteur électrique 60 ou par un autre moteur électrique. Dans un telle mode de réalisation, la poignée 38 n'a pas besoin d'être déplaçable à la main entre une position de repos et une position enfoncée.

D'autres modes de réalisation du premier et du second dispositifs intérieurs de contrôle d'accès sont possibles. Par exemple, en variante, le badge 94 n'est pas un badge à transpondeur mais un badge se présentant sous la forme d'un carte avec une bande magnétique ou une puce électronique. Les premier et second dispositifs intérieurs de contrôle d'accès peuvent également être remplacés par un dispositif intérieur de contrôle d'accès qui n'utilise pas un badge comme, par exemple, un lecteur d'empreintes digitales, un dispositif de reconnaissance faciale ou autre.

En variante, le second dispositif intérieur de contrôle d'accès comporte son propre écran tactile indépendant de l'écran tactile 44 de l'unité 80 de commande. Dans une autre variante, le second dispositif intérieur de contrôle d'accès ne comporte pas d'écran tactile. Par exemple, à la place, il comporte un clavier formé de touches mécaniques.

Dans un mode de réalisation simplifié, l'un quelconque ou tous les dispositifs intérieurs de contrôle d'accès sont omis. Dans ce cas, toute sortie du domicile nécessite l'intervention de l'aidant.

De façon similaire, de nombreux autres modes de réalisation du dispositif extérieur de contrôle d'accès sont possibles. Par exemple, le dispositif extérieur de contrôle d'accès peut également être un lecteur d'empreintes digitales, un dispositif de reconnaissance faciale, un clavier à code ou un cylindre électronique apte à acquérir les droits d'accès enregistrés dans la mémoire d'un clé mécanique. Avantageusement, un tel cylindre électronique est alors utilisé à la place du cylindre 46. Un tel cylindre électronique est capable de lire les droits d'accès enregistrés dans la mémoire d'une clé puis à autoriser l'entraînement en rotation du panneton 68 en tournant la clé uniquement si les droits d'accès lus sont des droits d'accès autorisés à déverrouiller la porte 4. Dans ce cas, la mémoire de la clé correspond à un badge combiné à une clé mécanique.

Le dispositif extérieur de contrôle d'accès peut également être omis. Dans ce dernier cas, le déverrouillage de la porte 4 est uniquement possible à l'aide d'une clé mécanique introduite dans le cylindre 46.

Dans un mode de réalisation simplifié, le cylindre 46 est omis. Dans ce cas, c'est le dispositif extérieur de contrôle d'accès qui est systématiquement utilisé pour déverrouiller la porte 4 depuis l'extérieur.

Dans un mode de réalisation particulier, les droits d'accès ne sont pas enregistrés dans la mémoire 82 mais dans la mémoire d'un serveur externe de contrôle d'accès. Ce serveur externe est situé à l'extérieur du domicile et raccordé à l'unité 80, par exemple, par l'intermédiaire du réseau 28. Dans ce cas, les droits d'accès acquis par la tête 48 ou la tête 100 ou par l'intermédiaire du clavier sont transmis à ce serveur externe. Le serveur externe compare alors les droits d'accès reçus aux droits d'accès pré-enregistrés. Si les droits d'accès reçus correspondent aux droits d'accès pré-enregistrés, alors de serveur externe transmet une commande de déverrouillage à l'unité 80 qui l'exécute.

Le mécanisme 50 à pêne peut comporter un seul pêne. Les pênes peuvent être déplacés entre leur position rentrée et sortie par une rotation.

### Variantes du procédé de contrôle d'accès :

Lors des étapes 174 et 184, la durée pré-déterminée pendant laquelle l'établissement de la communication visiophonique est inhibée, n'est pas nécessairement une durée constante. Par exemple, en variante, après que le badge 94 ait été présenté devant la tête 48 de lecture, le module 92 est automatiquement réactivé dès que l'ouverture puis la fermeture de la porte 4 est détectée à l'aide du capteur 102. Dans ce cas, la durée prédéterminée est écourtée si la fermeture de la porte 4 est détectée avant l'expiration d'une durée maximale prédéterminée.

Les étapes 170, 172, 174 ou les étapes 180, 182, 184 peuvent être omises.

### Autres variantes :

D'autres modes de réalisation du terminal 6 sont possibles. Par exemple, en variante, le terminal 6 est un smartphone ou une tablette portable.

Le système 2 a été décrit dans le cas où il est utilisé pour aider au maintien à domicile de personnes atteintes de maladies neurodégénératives. Toutefois, le même système peut aussi être utilisé pour aider au maintien à domicile d'autres personnes que celles atteintes de maladies neurodégénératives. Par exemple, le système 2 peut aussi être utilisé pour aider au maintien d'enfants à l'intérieur du domicile en absence des parents. Dans ce cas, le terminal distant est typiquement le smartphone d'un des parents.

Plusieurs des variantes décrites ci-dessus peuvent être combinées dans un même mode de réalisation.

Le second dispositif intérieur de contrôle d'accès peut être mis en œuvre dans un système d'aide au maintien à domicile identique à ceux décrits ici, sauf qu'il est dépourvu de la capacité à établir automatiquement, en réponse à l'enfoncement de la poignée 38, une communication visiophonique avec un terminal distant afin de recevoir une commande de déverrouillage transmise par ce terminal distant. Dans ce cas, le second dispositif intérieur de contrôle d'accès est utilisé pour interdire le déverrouillage de la porte d'accès par une personne, située à l'intérieur du domicile, mais qui n'a pas le droit de déverrouiller la porte d'entrée. Typiquement, cette personne est un enfant et le système d'aide au maintien à domicile est alors utilisé pour interdire aux enfants de déverrouiller la porte d'entrée en absence des parents. Pour cette application, le terminal 6, le capteur 98 et le module logiciel 90 peuvent être omis. A l'inverse, le bandeau de porte doit au moins comporter le premier ou le second dispositif intérieur de contrôle d'accès.

### Chapitre III : Avantages des modes de réalisation décrits :

Le fait d'intégrer dans un seul bandeau de porte l'ensemble des éléments nécessaires à l'aide au maintien à domicile permet de simplifier l'installation du système d'aide au maintien à domicile. En effet, il n'y a qu'une seule pièce à installer à l'intérieur du domicile, c'est le bandeau de porte.

Le fait que l'intention de sortir soit détectée par la prise en main de la poignée 38 simplifie l'utilisation du système. En effet, grâce à cela la personne qui est maintenue à domicile n'a pas besoin de mémoriser une nouvelle façon de signaler son intention de sortir comme, par exemple, enfoncée une touche sur l'écran tactile ou présenter un badge devant une tête de lecture.

Le fait d'utiliser la poignée 38 pour déplacer le pêne demi-tour et pour détecter l'intention de sortir simplifie la réalisation du bandeau de porte puisque la même pièce est utilisée pour remplir ces deux fonctions.

La dispositif intérieur de contrôle d'accès permet à une personne qui habite le même domicile que la personne aidée, de sortir du domicile sans pour cela déclencher l'établissement de la communication visiophonique avec l'aidant.

L'utilisation du même écran tactile pour établir la communication visiophonique et pour former le clavier du second dispositif intérieur de contrôle d'accès simplifie la réalisation du bandeau de porte.

L'utilisation du module 92 de l'unité 80 de commande pour, en plus, traiter les droits d'accès acquis par le dispositif extérieur de contrôle d'accès permet de simplifier la réalisation du bandeau de porte.

Le fait d'utiliser le même dispositif de contrôle d'accès à la fois à l'intérieur et à l'extérieur permet de déverrouiller la porte 4 avec le même badge 94 aussi bien du côté extérieur que du côté intérieur. Cela simplifie donc l'utilisation du bandeau de porte.

## Revendications

1. Système d'aide au maintien à domicile, ce système comportant :
- une porte (4) située à l'entrée du domicile et délimitant l'intérieur du domicile de l'extérieur du domicile, cette porte étant déplaçable entre une position fermée dans laquelle elle interdit l'accès à l'extérieur du domicile, et une position ouverte dans laquelle elle autorise l'accès à l'extérieur du domicile, cette porte comportant une face intérieure tournée vers l'intérieur du domicile et, du côté opposé, une face extérieure,
- un terminal (6) distant situé à l'extérieur du domicile et destiné à être utilisé par un aidant, ce terminal distant étant apte à établir une communication visiophonique,
- un bandeau (8) de porte monté sur la face intérieure de la porte,
**caractérisé en ce que** le bandeau (8) de porte est conforme à l'une quelconque des revendications 2 à 9.

2. Bandeau de porte pour la réalisation d'un système d'aide au maintien à domicile conforme à la revendication 1, ce bandeau de porte étant apte à être monté sur la face intérieure de la porte, ce bandeau de porte comportant :
- un poignée (38) accessible depuis l'intérieur du domicile et déplaçable depuis une position de repos jusqu'à une position enfoncée,
- un mécanisme (50) à pêne apte à être déplacé :
- depuis un état saillant dans lequel au moins un pêne (42) est dans une position sortie dans laquelle il verrouille la porte dans sa position fermée par coopération de forme avec une cavité correspondante solidaire d'un dormant de la porte,
- vers un état escamoté dans lequel chaque pêne (42) est dans une position rentrée dans laquelle la porte peut être déplacée de sa position fermée vers sa position ouverte,
- un moteur électrique (60) apte à déplacer le mécanisme à pêne de son état saillant vers son état escamoté,
- une unité (80) de commande du moteur électrique,
**caractérisé en ce que** :
- le bandeau de porte comporte un capteur (98) apte à détecter une prise en main de la poignée, et
- l'unité (80) de commande est apte :
- à détecter, à partir des mesures du capteur, une intention de sortir et, en réponse, à établir automatiquement une communication visiophonique avec le terminal distant (6), et
- à recevoir une commande de déverrouillage de la porte transmise par ce terminal distant et, en réponse, à commander le moteur électrique (60) pour déplacer le mécanisme à pêne vers son état escamoté.

3. Bandeau de porte selon la revendication 2, dans lequel le bandeau de porte comporte :
- un pêne demi-tour (36) comportant une extrémité biseautée, cette extrémité biseautée étant déplaçable par la poignée :
- depuis une position sortie, dans laquelle elle maintient la porte dans sa position fermée par coopération de forme avec une cavité correspondante solidaire du dormant de la porte,
- vers une position rentrée dans laquelle la porte peut librement être déplacée de sa position fermée vers sa position ouverte,
- un ressort de rappel qui sollicite en permanence le pêne demi-tour vers sa position sortie, et
- la poignée (38) est apte à déplacer le pêne demi-tour depuis sa position sortie vers sa position rentrée lorsqu'elle est déplacée de sa position de repos vers sa position enfoncée.

4. Bandeau de porte selon l'une quelconque des revendications 2 à 3, dans lequel le bandeau de porte comporte un dispositif intérieur (48, 92 ; 44, 92) de contrôle d'accès accessible depuis l'intérieur du domicile, ce dispositif intérieur de contrôle d'accès étant apte :
- à acquérir les droits d'accès d'un utilisateur présent à l'intérieur du domicile, et
- uniquement si les droits d'accès ainsi acquis autorise le déverrouillage de la porte, à déclencher en réponse le déplacement du mécanisme à pêne vers son état escamoté et à inhiber l'établissement automatique de la communication visiophonique avec le terminal distant même si la poignée est prise en main.

5. Bandeau selon la revendication 4, dans lequel :
- l'unité (80) de commande comporte un écran tactile (44) visible depuis l'intérieur du domicile, l'unité (80) de commande étant configurée pour afficher sur cet écran tactile les images filmées par le terminal distant lorsque la communication visiophonique avec le terminal distant est établie, et
- l'unité de commande est en plus configurée pour remplir la fonction de dispositif intérieur de contrôle d'accès, l'unité de commande étant configurée à cet effet :
- pour afficher un clavier sur l'écran tactile et pour acquérir un code secret d'ouverture saisie sur ce clavier par une personne située à l'intérieur du domicile, et
- lorsque le code secret d'ouverture acquis par l'intermédiaire de ce clavier correspond à un code pré-enregistré d'ouverture autorisé, pour déclencher en réponse le déplacement du mécanisme à pêne vers son état escamoté tout en inhibant l'établissement automatique de la communication visiophonique avec le terminal distant même si la poignée est prise en main.

6. Bandeau de porte selon l'une quelconque des revendications 2 à 5, dans lequel :
- le bandeau de porte comporte un dispositif extérieur (92, 100) de contrôle d'accès accessible depuis l'extérieur du domicile, ce dispositif extérieur de contrôle d'accès étant apte à acquérir les droits d'accès d'une personne présente à l'extérieur du domicile, et
- l'unité (80) de commande est apte à recevoir les droits d'accès acquis par le dispositif extérieur de contrôle d'accès et, uniquement si les droits d'accès ainsi acquis autorise le déverrouillage de la porte, à déclencher en réponse le déplacement du mécanisme à pêne vers son état escamoté tout en inhibant l'établissement automatique de la communication visiophonique avec le terminal distant même si la poignée est prise en main.

7. Bandeau de porte selon les revendications 4 et 6 prises ensembles, dans lequel les dispositifs intérieur et extérieur de contrôle d'accès sont chacun apte à acquérir les droits d'accès enregistrés sur un même badge.

8. Bandeau de porte selon l'une quelconque des revendications 2 à 7, dans lequel l'unité de commande comporte un écran (44), une caméra et un microphone aptes à établir la communication visiophonique avec le terminal distant.

9. Bandeau de porte selon l'une quelconque des revendications 2 à 8, dans lequel l'unité de commande comporte un récepteur (56) sans fil apte à recevoir la commande de déverrouillage par l'intermédiaire d'un réseau (28) sans fil grande distance de transmission d'informations.

## Patentansprüche

1. System zur Unterstützung des Verbleibs in der eigenen Wohnung, wobei dieses System umfasst:
- eine Tür (4), die sich am Eingang der Wohnung befindet und den Innenbereich der Wohnung vom Außenbereich der Wohnung abgrenzt, wobei diese Tür zwischen einer geschlossenen Position, in der sie den Zugang zum Außenbereich der Wohnung verhindert, und einer offenen Position, in der sie den Zugang zum Außenbereich der Wohnung ermöglicht, bewegbar ist, wobei diese Tür eine dem Innenbereich der Wohnung zugewandte Innenseite und auf der gegenüberliegenden Seite eine Außenseite aufweist,
- ein außerhalb der Wohnung befindliches Fernterminal (6), das zur Nutzung durch eine Pflegekraft bestimmt ist, wobei dieses Fernterminal in der Lage ist, eine Videotelefonverbindung herzustellen,
- eine an der Innenseite der Tür angebrachte Türblende (8),
**dadurch gekennzeichnet, dass** die Türblende (8) einem der Ansprüche 2 bis 9 entspricht.

2. Türblende zur Realisierung eines Systems zur Unterstützung des Verbleibs in der eigenen Wohnung gemäß Anspruch 1, wobei diese Türblende an der Innenseite der Tür montiert werden kann und Folgendes umfasst:
- einen von der Innenseite der Wohnung aus zugänglichen Griff (38), der aus einer Ruhestellung in eine eingedrückte Stellung bewegbar ist,
- einen verschiebbaren Riegelmechanismus (50):
- aus einem vorstehenden Zustand, in dem sich mindestens ein Riegel (42) in einer ausgefahrenen Position befindet, in der er die Tür in ihrer geschlossenen Position durch Formschluss mit einer entsprechenden, fest mit einem Türrahmen verbundenen Aussparung verriegelt,
- in einen versenkten Zustand, in dem sich jeder Riegel (42) in einer eingezogenen Position befindet, in der die Tür von ihrer geschlossenen Position in ihre geöffnete Position bewegt werden kann,
- einen Elektromotor (60), der den Riegelmechanismus aus seinem vorstehenden Zustand in seinen versenkten Zustand bewegen kann,
- eine Steuereinheit (80) für den Elektromotor,
**dadurch gekennzeichnet, dass**:
- der Türrahmen einen Sensor (98) aufweist, der in der Lage ist, ein Ergreifen des Türgriffs zu erfassen, und
- die Steuereinheit (80) in der Lage ist:
- anhand der Messwerte des Sensors eine Absicht zum Verlassen des Raums zu erkennen und daraufhin automatisch eine Videotelefonverbindung mit dem entfernten Endgerät (6) herzustellen, und
- einen von diesem entfernten Endgerät übertragenen Befehl zum Entriegeln der Tür zu empfangen und als Reaktion darauf den Elektromotor (60) so anzusteuern, dass der Riegelmechanismus in seinen versenkten Zustand bewegt wird.

3. Türblende nach Anspruch 2, wobei die Türblende umfasst:
- einen Fallriegel (36) mit einem abgeschrägten Ende, wobei dieses abgeschrägte Ende durch den Griff bewegbar ist:
- aus einer ausgefahrenen Position, in der er die Tür durch Formschluss mit einer entsprechenden, fest mit dem Türrahmen verbundenen Aussparung in ihrer geschlossenen Position hält,
- in eine eingezogene Position, in der die Tür frei von ihrer geschlossenen Position in ihre geöffnete Position bewegt werden kann,
- eine Rückstellfeder, die den Fallriegel ständig in seine ausgefahrene Position drückt, und
- der Griff (38) in der Lage ist, den Fallriegel aus seiner ausgefahrenen Position in seine eingefahrenen Position zu bewegen, wenn er aus seiner Ruhestellung in seine gedrückte Position bewegt wird.

4. Türblende gemäß einem der Ansprüche 2 bis 3, wobei die Türblende eine von der Innenseite der Wohnung aus zugängliche interne Zugangskontrollvorrichtung (48, 92; 44, 92) aufweist, wobei diese interne Zugangskontrollvorrichtung in der Lage ist:
- die Zugangsrechte eines im Inneren der Wohnung anwesenden Benutzers zu erfassen und
- nur dann, wenn die so erfassten Zugangsrechte das Entriegeln der Tür erlauben, als Reaktion darauf die Bewegung des Riegelmechanismus in seinen versenkten Zustand auszulösen und die automatische Herstellung der Videokommunikation mit dem entfernten Endgerät zu unterbinden, selbst wenn der Türgriff betätigt wird.

5. Blende gemäß Anspruch 4, wobei:
- die Steuereinheit (80) einen vom Inneren des Wohnraums aus sichtbaren Touchscreen (44) aufweist, wobei die Steuereinheit (80) so konfiguriert ist, dass sie auf diesem Touchscreen die vom Fernterminal aufgenommenen Bilder anzeigt, wenn die Videokommunikation mit dem Fernterminal hergestellt ist, und
- die Steuereinheit zusätzlich so konfiguriert ist, dass sie die Funktion einer internen Zugangskontrollvorrichtung erfüllt, wobei die Steuereinheit zu diesem Zweck so konfiguriert ist:
- eine Tastatur auf dem Touchscreen anzuzeigen und einen über diese Tastatur von einer im Haus befindlichen Person eingegebenen Geheimcode zum Öffnen zu erfassen, und
- wenn der über diese Tastatur erfasste Geheimcode einem vorab gespeicherten, autorisierten Öffnungscode entspricht, daraufhin die Bewegung des Riegelmechanismus in seinen versenkten Zustand auszulösen und gleichzeitig den automatischen Aufbau der Videokommunikation mit dem entfernten Endgerät zu unterbinden, selbst wenn der Türgriff betätigt wird.

6. Türblende gemäß einem der Ansprüche 2 bis 5, wobei:
- die Türblende eine von außerhalb des Wohnsitzes zugängliche externe Zugangskontrollvorrichtung (92, 100) umfasst, wobei diese externe Zugangskontrollvorrichtung in der Lage ist, die Zugangsrechte einer außerhalb des Wohnsitzes befindlichen Person zu erfassen, und
- die Steuereinheit (80) in der Lage ist, die von der externen Zugangskontrollvorrichtung erfassten Zugangsrechte zu empfangen und, nur wenn die so erfassten Zugangsrechte das Entriegeln der Tür erlauben, als Reaktion darauf die Bewegung des Riegelmechanismus in seinen versenkten Zustand auszulösen und gleichzeitig die automatische Herstellung der Videokommunikation mit dem entfernten Endgerät zu unterbinden, selbst wenn der Türgriff betätigt wird.

7. Türblende gemäß den zusammengenommenen Ansprüchen 4 und 6, wobei die innere und die äußere Zugangskontrollvorrichtung jeweils in der Lage sind, die auf ein und demselben Ausweis gespeicherten Zugangsrechte zu erfassen.

8. Türblende gemäß einem der Ansprüche 2 bis 7, wobei die Steuereinheit einen Bildschirm (44), eine Kamera und ein Mikrofon umfasst, die in der Lage sind, die Videokommunikation mit dem entfernten Endgerät herzustellen.

9. Türblende gemäß einem der Ansprüche 2 bis 8, wobei die Steuereinheit einen drahtlosen Empfänger (56) umfasst, der in der Lage ist, den Entriegelungsbefehl über ein drahtloses Netzwerk (28) mit großer Übertragungsreichweite zu empfangen.

## Claims

1. A system to assist with home care, the system comprising:
- a door (4) situated at the entrance to the home and separating the interior of the home from the exterior of the home, said door being movable between a closed position in which it prevents access to the exterior of the home, and an open position in which it allows access to the exterior of the home, said door comprising an inner face facing the interior of the home and, on the opposite side, an outer face,
- a remote terminal (6) located outside the home and intended for use by a carer, this remote terminal being capable of establishing a video-telephone connection,
- a door panel (8) mounted on the inner face of the door,
**characterised in that** the door panel (8) complies with any one of claims 2 to 9.

2. A door panel for implementing a home care support system in accordance with claim 1, said door panel being suitable for mounting on the inner surface of the door, said door panel comprising:
- a handle (38) accessible from inside the home and movable from a rest position to a depressed position,
- a bolt mechanism (50) capable of being moved:
- from a protruding state in which at least one bolt (42) is in an extended position in which it locks the door in its closed position by positive engagement with a corresponding recess integral with a door frame,
- to a retracted state in which each bolt (42) is in a retracted position in which the door can be moved from its closed position to its open position,
- an electric motor (60) capable of moving the bolt mechanism from its protruding state to its retracted state,
- a control unit (80) for the electric motor,
**characterised in that**:
- the door frame comprises a sensor (98) capable of detecting when the handle is gripped, and
- the control unit (80) is capable of:
- to detect, based on the sensor's measurements, an intention to exit and, in response, to automatically establish a video-telephone connection with the remote terminal (6), and
- to receive a door unlock command transmitted by said remote terminal and, in response, to control the electric motor (60) to move the bolt mechanism to its retracted state.

3. Door panel according to claim 2, wherein the door panel comprises:
- a latch bolt (36) comprising a bevelled end, said bevelled end being movable by the handle:
- from an extended position, in which it holds the door in its closed position by positive engagement with a corresponding recess integral with the door frame,
- to a retracted position in which the door can be freely moved from its closed position to its open position,
- a return spring which constantly urges the latch bolt towards its extended position, and
- the handle (38) is capable of moving the latch bolt from its extended position to its retracted position when it is moved from its rest position to its depressed position.

4. A door panel according to any one of claims 2 to 3, wherein the door panel comprises an internal access control device (48, 92; 44, 92) accessible from inside the home, said internal access control device being capable of:
- to acquire the access rights of a user present inside the home, and
- only if the access rights thus acquired authorise the unlocking of the door, to trigger, in response, the movement of the bolt mechanism to its retracted state and to inhibit the automatic establishment of video-telephone communication with the remote terminal even if the handle is gripped.

5. A panel according to claim 4, wherein:
- the control unit (80) comprises a touch screen (44) visible from inside the home, the control unit (80) being configured to display on this touch screen the images filmed by the remote terminal when video communication with the remote terminal is established, and
- the control unit is further configured to act as an indoor access control device, the control unit being configured for this purpose:
- to display a keypad on the touchscreen and to receive a secret opening code entered on said keypad by a person located inside the home, and
- when the secret opening code acquired via said keypad corresponds to a pre-registered authorised opening code, to trigger, in response, the movement of the bolt mechanism to its retracted state whilst inhibiting the automatic establishment of video-telephone communication with the remote terminal even if the handle is gripped.

6. A door panel according to any one of claims 2 to 5, wherein:
- the door panel comprises an external access control device (92, 100) accessible from outside the home, said external access control device being capable of acquiring the access rights of a person present outside the home, and
- the control unit (80) is capable of receiving the access rights acquired by the external access control device and, only if the access rights thus acquired authorise the unlocking of the door, to trigger, in response, the movement of the bolt mechanism to its retracted state whilst inhibiting the automatic establishment of video-telephone communication with the remote terminal even if the handle is gripped.

7. A door panel according to claims 4 and 6 taken together, in which the internal and external access control devices are each capable of acquiring the access rights recorded on the same badge.

8. A door panel according to any one of claims 2 to 7, wherein the control unit comprises a screen (44), a camera and a microphone capable of establishing video-audio communication with the remote terminal.

9. A door panel according to any one of claims 2 to 8, wherein the control unit comprises a wireless receiver (56) capable of receiving the unlock command via a long-range wireless data transmission network (28).
